# DEMANDE DE BREVET EUROPEEN

(11) **EP 1 500 460 A1**
(43) Date de publication de la demande: **26.01.2005**
(21) Numéro de dépôt: 04291847.4
(22) Date de dépôt: 20.07.2004
(51) Int. Cl.: B23P 11/00, B60B 27/00, F16C 35/063

(54) **Procédé de réalisation d'une collerette de rétention à transition progressive**

(30) Priorité: 24.07.2003 FR 0350366
(71) Demandeur: S.N.R. ROULEMENTS, 74010 Annecy Cédex (FR)
(72) Inventeur: Lagorgette, Pascal, 74320 Sevrier (FR)
(74) Mandataire: Derambure, Christian

(57) **Abrégé**

Procédé de réalisation d'une collerette annulaire essentiellement radiale sur la partie extrême annulaire creuse (15) d'une pièce (7), ledit procédé comprenant une étape de déformation de sorte à obtenir une préforme de collerette (23) présentant une partie radiale (23b) et une étape de déploiement de ladite préforme (23) de sorte à obtenir, par pressage, la mise en forme définitive de la collerette ;
dans lequel, lors de la déformation, une portion intermédiaire (23e) de la surface latérale libre de la partie radiale (23b) est inclinée d'un angle β non nul par rapport à la perpendiculaire à l'axe (5) et, lors du déploiement, au moins une zone extrême de ladite portion intermédiaire (23e) est inclinée d'un angle δ par rapport à la perpendiculaire à l'axe (5), l'angle δ étant strictement supérieur à l'angle β.

L'invention concerne également un procédé de rétention d'un roulement (1) sur un arbre (7) ainsi qu'un ensemble comprenant un roulement (1) et un arbre (7).

## Description

L'invention concerne un procédé de réalisation d'une collerette annulaire essentiellement radiale sur la partie extrême annulaire creuse d'une pièce, un procédé de rétention d'un roulement sur la surface extérieure d'un arbre ainsi qu'un ensemble comprenant un roulement et un arbre.

Il est connu du document FR 2 827 202 de réaliser en deux étapes une collerette annulaire essentiellement radiale sur la partie extrême annulaire creuse d'une pièce. Lors d'une première étape de déformation, une préforme présentant une partie radiale dont la surface libre est essentiellement plane et perpendiculaire à l'axe de la pièce est obtenue. Une portion de cette partie radiale est ensuite déployée de sorte à présenter une surface libre inclinée.

Ce procédé en deux étapes présente de nombreux avantages. Il permet notamment de réduire de manière significative d'une part les efforts appliqués au roulement et d'autre part les efforts sur les outils de mise en forme. De ce fait, les détériorations prématurées du roulement et surtout des outils sont évitées.

La collerette annulaire essentiellement radiale peut être utilisée pour retenir un roulement sur un arbre en appliquant une tension de rétention suffisante entre le roulement et la surface extérieure de l'arbre. La collerette est donc dimensionnée pour supporter les contraintes importantes de fonctionnement.

Mais, l'application du procédé, notamment à la réalisation de collerette sur des arbres de petit diamètre, peut entraîner des contraintes de traction importantes au niveau du raccordement entre les portions respectivement plane et inclinée de la collerette.

L'invention vise à perfectionner le procédé de réalisation d'une collerette décrit dans le document FR 2 827 202. Pour ce faire, l'invention propose un procédé de réalisation d'une collerette en deux étapes dans lequel la première étape permet d'obtenir une préforme ayant une partie radiale dont la surface libre présente une portion intermédiaire inclinée, un déploiement étant ensuite appliqué à tout ou partie de cette portion intermédiaire afin d'obtenir la forme définitive de la collerette.

De cette manière, les contraintes dans la matière sont réduites en réalisant une transition progressive entre la portion essentiellement plane et perpendiculaire à l'axe de la pièce et la portion inclinée de la collerette, ce qui est bénéfique pour la tenue de la collerette dans le temps.

A cet effet, et selon un premier aspect, l'invention propose un procédé de réalisation d'une collerette annulaire essentiellement radiale sur la partie extrême annulaire creuse d'une pièce, ledit procédé comprenant les étapes prévoyant de :
- déformer radialement la partie extrême à l'aide d'un premier outil, l'axe de l'outil et l'axe de la partie extrême formant un angle α non nul entre eux, l'outil et la partie extrême étant animés relativement l'un par rapport à l'autre d'une part d'un mouvement de rotation autour de l'axe de la partie extrême et d'autre part d'un mouvement linéaire selon l'axe de la partie extrême, de sorte à obtenir une préforme de collerette présentant une partie radiale ;
- déployer ladite préforme à l'aide d'un deuxième outil, ledit outil et ladite préforme étant animés l'un par rapport à l'autre d'un mouvement linéaire selon l'axe de la préforme de sorte à obtenir, par pressage, la mise en forme définitive de la collerette ;
dans lequel, lors de la déformation, une portion intermédiaire de la surface latérale libre de la partie radiale est inclinée d'un angle β non nul par rapport à la perpendiculaire à l'axe de la préforme et dans lequel, lors du déploiement, au moins une zone extrême de ladite portion intermédiaire est inclinée d'un angle δ par rapport à la perpendiculaire à l'axe de la préforme, l'angle δ étant strictement supérieur à l'angle β.

Selon un deuxième aspect, l'invention propose un procédé de rétention d'un roulement sur la surface extérieure d'un arbre, ledit roulement comprenant au moins une bague intérieure pourvue d'un alésage annulaire, une bague extérieure et des corps roulants disposés entre lesdites bagues, ledit arbre présentant un diamètre extérieur sensiblement égal au diamètre de l'alésage et au moins une saillie axiale annulaire creuse, ledit procédé comprenant les étapes prévoyant de :
- disposer coaxialement l'arbre dans l'alésage de la bague intérieure de sorte qu'au moins une partie extrême de la saillie soit disposée à l'extérieur de l'alésage ;
- réaliser sur la saillie, par mise en oeuvre du procédé décrit ci-dessus, une collerette s'étendant radialement vers l'extérieur en étant en appui sur au moins une partie de la face latérale de la bague intérieure, ladite collerette formant moyen de rétention de la bague intérieure du roulement.

Selon un troisième aspect l'invention propose un ensemble comprenant un roulement et un arbre, ledit roulement étant retenu ou immobilisé sur ledit arbre par mise en oeuvre du procédé de rétention décrit ci-dessus, ladite collerette comprenant une partie axiale, une partie radiale et une partie intermédiaire qui raccorde ces deux parties, la partie radiale présentant une surface latérale annulaire libre et une surface extrême transversale libre sensiblement parallèle à l'axe, la surface latérale annulaire libre présentant une portion sensiblement plane et perpendiculaire à l'axe, une portion intermédiaire inclinée d'un angle β par rapport à la perpendiculaire à l'axe et une zone extrême inclinée d'un angle δ par rapport à la perpendiculaire à l'axe.

D'autres objets et avantages de l'invention apparaîtront au cours de la description qui suit, faite en référence aux dessins annexés, dans lesquels :
- la figure 1 représente, en coupe longitudinale et de façon schématique, un ensemble comprenant un roulement emmanché sur la surface extérieure d'un moyeu de roue, avant la réalisation de la collerette formant moyen de rétention dudit roulement ;
- la figure 2 représente, en coupe longitudinale et de façon schématique, l'étape de déformation de la partie extrême du moyeu de l'ensemble de la figure 1, en vue de former une préforme de collerette de rétention ;
- la figure 3 représente, en coupe longitudinale et de façon schématique, l'étape de déploiement de la préforme de collerette obtenue par mise en oeuvre de l'étape représentée sur la figure 2, en vue de former une collerette de rétention ;
- la figure 4 représente, en coupe longitudinale et de façon schématique, l'ensemble de la figure 1 dans lequel le roulement est retenu par la collerette ;
- la figure 5 représente, en coupe longitudinale partielle et de façon schématique, un premier outil pour la mise en oeuvre de la première étape de déformation du procédé suivant l'invention ;
- la figure 6 représente, en coupe longitudinale partielle et de façon schématique, un deuxième outil pour la mise en oeuvre de l'étape de déploiement du procédé suivant l'invention ;
- la figure 7 représente, en coupe longitudinale et de façon schématique, une géométrie de collerette obtenue par mise en oeuvre du procédé selon l'invention avec les outils représentés sur les figures 5 et 6.

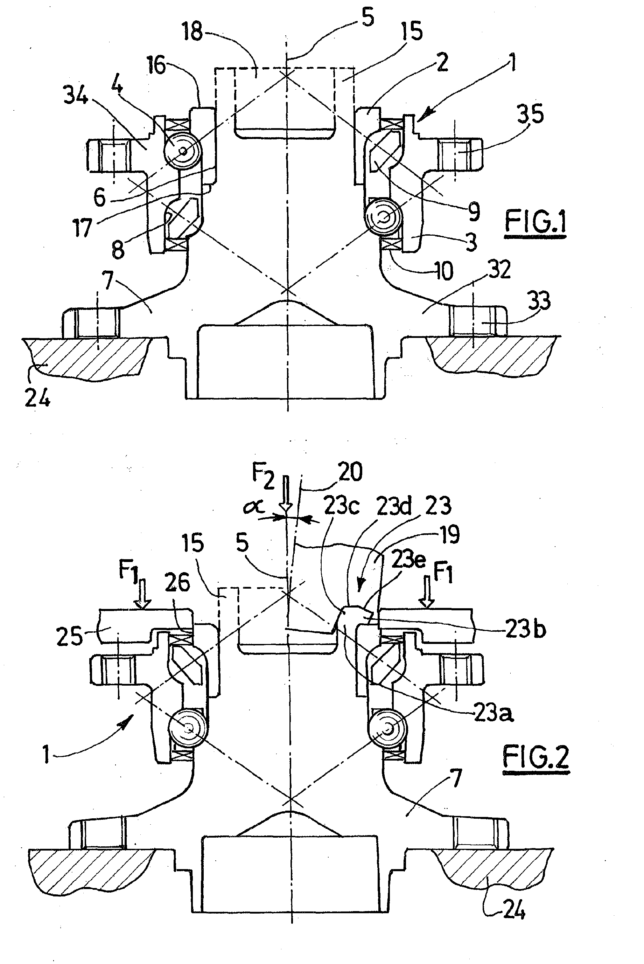

Sur les figures 1 à 4, est représenté un ensemble comprenant un roulement 1 pourvu d'une bague intérieure 2, d'une bague extérieure 3 et de corps roulants 4 disposés entre elles afin de permettre la rotation relative de ces deux bagues 2, 3 autour d'un axe 5.

Dans la description, les termes « extérieur » et « intérieur » sont définis par rapport à un plan respectivement éloigné et à proximité de l'axe 5, les termes « axial » ou « transversal » sont définis par rapport à un plan parallèle à l'axe 5 et les termes « radial » ou « latéral » sont définis par rapport à un plan perpendiculaire à l'axe 5.

Dans le mode de réalisation représenté, la bague extérieure 3 est fixe et la bague intérieure 2 est tournante mais, en fonction des besoins, le cas inverse peut également être envisagé.

Les bagues intérieure 2 et extérieure 3 sont formées respectivement d'un anneau annulaire dans lequel un alésage est formé, l'alésage 6 de la bague intérieure 2 étant agencé pour permettre la disposition d'un arbre 7 à l'intérieur de celui-ci, et celui de la bague extérieure 3 pour loger la bague intérieure 2 et les corps roulants 4.

Dans le mode de réalisation représenté, le roulement est assuré par deux rangées de billes 4 maintenues à équidistance par une cage 9. De plus, deux chemins de roulement 8 sont réalisés, en regard, l'un est prévu sur les faces respectivement extérieure et intérieure des bagues intérieure 2 et extérieure 3 et l'autre directement sur la surface externe de l'arbre 7 et sur la face intérieure de la bague extérieure 3. En variante, la bague intérieure peut être réalisée en deux parties accolées coaxialement l'une à l'autre.

Par ailleurs, le roulement 1 représenté sur les figures 1 à 4 est un roulement de train arrière comprenant une bague extérieure 3 pourvue d'une bride de fixation 34 de l'ensemble sur une structure fixe, par exemple du châssis du véhicule. A cet effet, la bride 34 comprend des trous de fixation 35 agencés pour permettre l'association par boulonnage.

Ces types de roulement sont particulièrement adaptés pour la mise en rotation d'un moyeu ou d'une fusée de roue d'un véhicule automobile. Toutefois, des roulements de train avant ou arrière, des roulements comprenant une bague extérieure lisse ou d'autres réalisations de roulement connues, notamment celles décrites dans le document FR 2 827 202, peuvent être utilisées en fonction des besoins de l'application envisagée.

En outre, le roulement 1 utilisé peut, de façon connue, être pourvu de moyens d'étanchéité 10 et/ou d'un dispositif capteur d'informations telles que la vitesse de rotation, le sens de déplacement et/ou la position angulaire de la bague tournante par rapport à la bague fixe.

Le roulement 1 est destiné à permettre la mise en rotation d'un arbre 7 par rapport à une structure fixe. Dans le mode de réalisation représenté, l'arbre est un moyeu 7 de roue de véhicule automobile et la structure fixe est le châssis du véhicule.

Bien que la description soit faite en relation avec un moyeu de roue de véhicule automobile, l'invention s'applique également à tous les montages où, pour mettre en rotation un arbre 7 par rapport à une structure fixe, il est nécessaire de retenir le roulement 1 sur la surface extérieure dudit arbre 7.

Pour permettre la mise en rotation du moyeu 7, le roulement 1 est disposé, par exemple par emmanchement du moyeu 7 dans l'alésage 6 de la bague intérieure 2, sur la surface extérieure du moyeu 7.

Dans le cadre de sa fonction, le roulement 1 doit être retenu fermement en rotation et en translation par rapport au moyeu 7. A cet effet, et compte tenu des efforts appliqués dans le cadre de son application, l'effort d'emmanchement ne suffit pas à assurer une rétention suffisante.

C'est pourquoi, l'on réalise une collerette radiale 11 sur une partie extrême 15 du moyeu 7, ladite collerette 11 venant en appui sur au moins une partie de la face latérale 16 de la bague intérieure 2 de sorte à appliquer un effort de rétention essentiellement axial sur le roulement 1.

On décrit ci-dessous, en relation avec les figures 1 à 4 les étapes du procédé de réalisation d'une telle collerette 11 par déformation plastique à froid.

Le roulement 1 est d'abord disposé coaxialement, par exemple par emmanchement du moyeu 7 dans l'alésage 6 de la bague intérieure 2, sur la surface extérieure du moyeu 7. A cet effet, le diamètre extérieur du moyeu 7 et le diamètre de l'alésage 6 sont prévus pour être sensiblement égaux. En variante, et pour assurer un effort de serrage plus important, le diamètre de l'alésage 6 peut être légèrement inférieur au diamètre extérieur du moyeu 7.

Le moyeu 7 comprend une surface annulaire radiale 17 sur laquelle la bague intérieure 2 est mise en appui afin de permettre le blocage axial du roulement 1 dans le sens d'emmanchement.

La surface 17 est disposée sur la face extérieure du moyeu 7 à une distance telle que, une fois le roulement 1 mis en contact avec la surface 17, une partie du moyeu 7 dépasse axialement de la bague intérieure 2.

Le moyeu 7 comprend en outre un alésage axial 18 qui, pour la partie dépassant de la bague intérieure 2, forme la saillie axiale annulaire creuse 15 sur laquelle la collerette 11 va être réalisée.

Les figures 1 à 4 représentent un mode de réalisation dans lequel le moyeu 7 est celui d'une roue non motrice d'un véhicule automobile. Le moyeu 7 est plein et présente un logement annulaire creux 18 formant la partie extrême 15 sur laquelle la collerette 11 va être réalisée.

Selon d'autres modes de réalisation non représentés, le moyeu est celui d'une roue motrice d'un véhicule automobile. Le moyeu comprend un alésage axial qui, pour la partie dépassant de la bague intérieure, forme la saillie axiale annulaire creuse sur laquelle la collerette est formée. Un arbre moteur peut être disposé dans l'alésage du moyeu pour être associé par vissage ou par tout autre moyen connu.

Sur les figures 1 à 4, le moyeu 7 comprend, à l'opposé de la saillie 15 ou de la collerette 11, une bride de fixation 32 de l'ensemble sur une structure tournante, par exemple formée d'une jante de roue. A cet effet, la bride 32 comprend des trous de fixation 33 agencés pour permettre l'association par boulonnage.

Le procédé comprend ensuite deux étapes de déformation qui vont permettre d'obtenir la forme de la collerette de rétention : une première déformation puis un déploiement.

La figure 2 représente la première étape du procédé au cours de laquelle la saillie 15 est déformée radialement à l'aide d'un premier outil 19 pour obtenir une préforme de collerette 23.

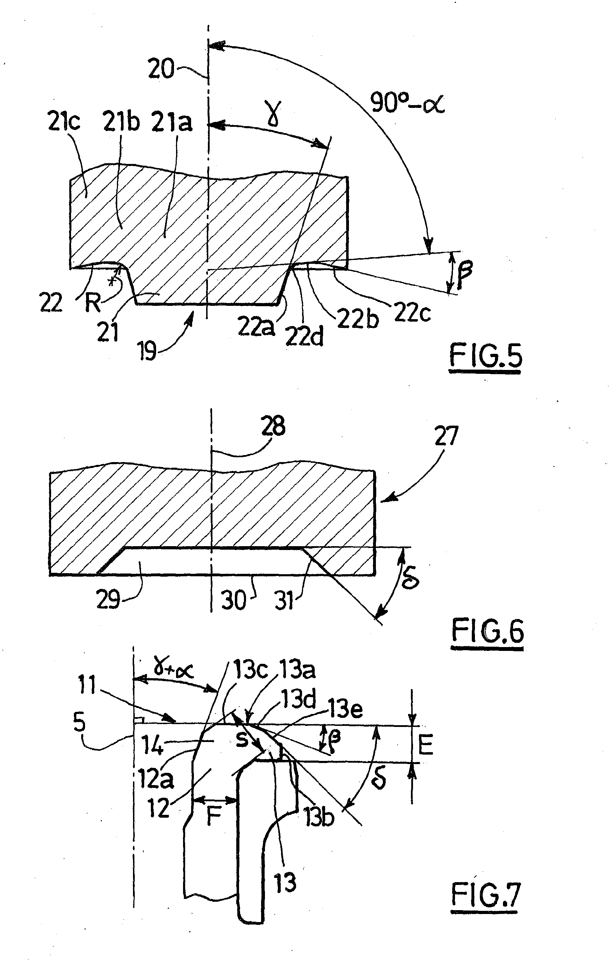

Le premier outil 19 représenté partiellement et schématiquement sur la figure 5 comprend un axe de révolution 20 et une saillie 21 formée en deux parties tronconiques 21a et 21b qui sont superposées suivant l'axe 20 en se rétrécissant suivant la direction de la saillie 21. Une troisième surface tronconique est superposée aux deux premières en s'écartant de l'axe 20 de sorte à former avec la saillie 21 un logement de contact 22.

Le logement de contact 22 présente ainsi trois surfaces principales de contact, à savoir une surface transversale de révolution 22a inclinée d'un angle γ par rapport à l'axe 20, une première surface latérale de révolution 22b inclinée d'un angle α par rapport à la perpendiculaire à l'axe 20 et une deuxième surface latérale de révolution 22c inclinée d'un angle β - α par rapport à la perpendiculaire à l'axe 20. Un congé de raccordement 22d de rayon R est prévu entre la surface transversale de révolution 22a et la première surface latérale de révolution 22b.

Lors de la première étape de déformation, l'outil 19 est disposé de sorte que son axe 20 forme un angle α non nul avec l'axe 5 puis l'outil 19 est animé d'une part d'un mouvement linéaire selon l'axe 5 afin de venir en contact local avec la saillie 15 en appliquant un effort F2 et d'autre part d'un mouvement de rotation autour de l'axe 5 de sorte à déformer toute la périphérie de la saillie 15.

Dans un exemple particulier, l'angle α est compris entre 0 et 20°. En outre, le premier outil 19 peut être réalisé de sorte que l'angle γ soit supérieur ou égal à l'angle α et que l'angle β soit compris entre 10° et 34°.

Pour permettre la déformation, l'ensemble formé du roulement 1 et du moyeu 7 est maintenu axialement dans le sens d'application de l'effort F2, par exemple par une butée 24 prévue à l'opposé de la saillie 15.

Suivant une autre réalisation, le premier outil 19 peut rester fixe et le moyeu 7 peut être animé des deux mouvements mentionnés ci-dessus.

En variante, le premier outil 19 peut, en outre, être animé d'un mouvement de rotation autour de son axe 20. A cet effet, soit l'outil 19 est laissé libre de tourner et le contact de déformation provoque sa rotation, soit la rotation est motorisée ou maîtrisée.

Dans les deux cas, la rotation permet de diminuer les contraintes induites lors de la déformation en diminuant le frottement résultant.

Cette première étape de déformation dite de « rivetage orbital », en faisant descendre progressivement le premier outil 19 sur la saillie 15, permet de réaliser une préforme de collerette 23 essentiellement radiale. Comme représenté sur la figure 2, la préforme 23 comprend une partie axiale 23a, une partie radiale 23b et une partie intermédiaire 23c qui relie ces deux parties 23a, 23b.

En particulier, lors de cette étape de déformation, la surface transversale 22a du premier outil 19 permet d'aider le pliage de la saillie 15 en guidant la matière vers l'extérieur (fluage de la matière).

Par ailleurs, la première surface latérale 22b permet d'obtenir une portion 23d de la surface latérale libre de la partie radiale 23b sensiblement plane et perpendiculaire à l'axe 5.

Et, une portion intermédiaire 23e de la surface libre de la partie radiale 23b est inclinée par la deuxième surface latérale de révolution 22c d'un angle β par rapport à la perpendiculaire à l'axe 5.

La préforme 23 assure, par l'intermédiaire de sa partie intermédiaire 23c et de sa partie radiale 23b, un effort de rétention axial sur le roulement 1. Toutefois, la partie radiale extrême de la collerette 11 n'est pas encore formée et l'appui de la préforme 23 sur la face latérale 16 de la bague intérieure 2 n'est que partiel.

En inclinant d'un angle relativement faible, notamment compris entre 10° et 34°, la portion intermédiaire 23e de la surface libre de la partie radiale 23b, lors de la première étape de déformation, des efforts sont appliqués une première fois de manière modérée sur la matière qui, de ce fait, ne subit pas de contrainte trop importante.

D'autre part, afin notamment de limiter les sollicitations appliquées aux bagues 2, 3 lors de la déformation, un effort axial F1 peut être appliqué sur la bague intérieure 2. Par exemple, l'effort peut être appliqué au moyen d'une lunette 25 mise en appui sur la face axiale 26 de la bague intérieure 2. En particulier, l'ouverture de la lunette 25 peut comprendre un chanfrein interne qui permet l'application d'un effort radial sur la bague intérieure, de sorte à limiter son expansion radiale lors de la première étape.

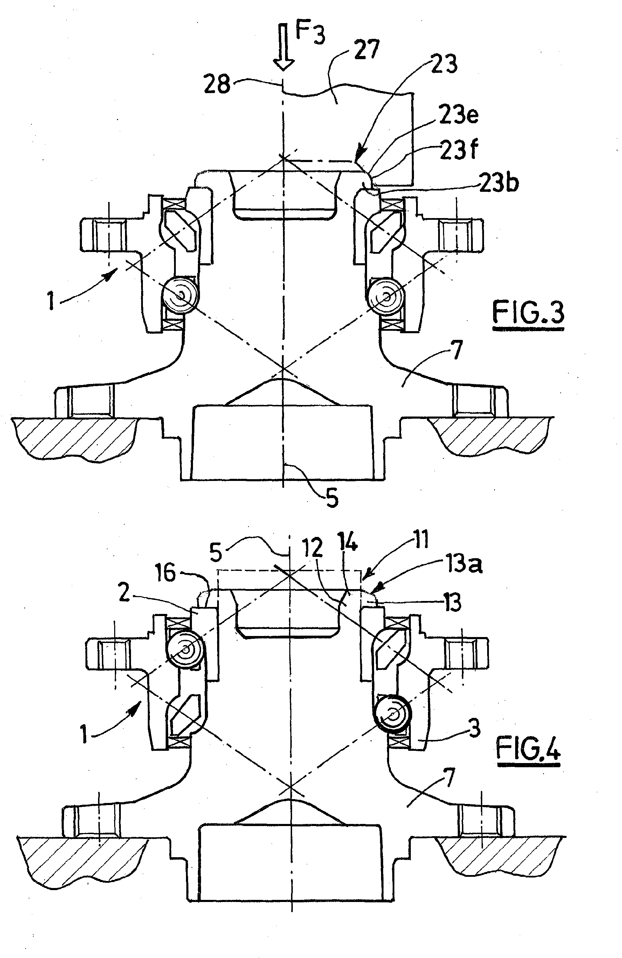

Le procédé suivant l'invention comprend une deuxième étape de déformation représentée sur la figure 3 au cours de laquelle la préforme 23 est déformée à l'aide d'un deuxième outil 27 pour former la collerette de rétention 11.

Le deuxième outil 27 représenté partiellement et schématiquement sur la figure 6 comprend un axe de révolution 28 et un logement de contact 29 de forme générale tronconique coaxiale et s'évasant vers l'ouverture 30 du logement 29.

Le deuxième outil 27 présente ainsi une surface de contact 31, à savoir une surface de révolution transversale 31 inclinée d'un angle δ par rapport à la perpendiculaire à l'axe 28. L'angle δ est strictement supérieur à l'angle β et dans un exemple particulier, l'angle δ est compris entre 34° et 60°.

Lors de l'étape de déploiement, l'outil 27 est animé d'un mouvement linéaire selon l'axe 5 afin de venir en contact avec la préforme 23 en appliquant un effort F3 sur sensiblement 360° de celle-ci.

Suivant une autre réalisation, le deuxième outil 27 peut rester fixe et le moyeu 7 peut être animé du mouvement linéaire mentionné ci-dessus.

Cette deuxième étape de déformation, en faisant descendre le deuxième outil 27 sur la préforme 23, permet de réaliser la collerette 11 essentiellement radiale par pressage.

La surface de contact 31 de l'outil 27 déforme une zone extrême de la portion intermédiaire inclinée 23e de la surface libre de la partie radiale 23b de sorte à former une zone extrême 23f inclinée d'un angle δ par rapport à la perpendiculaire à l'axe 5.

Les efforts de pressage destinés à la mise en forme définitive de la collerette sont moins importants du fait qu'ils s'appliquent sur une portion intermédiaire 23e déjà déformée. Par conséquent, la matière est moins contrainte que lorsque la deuxième déformation s'applique à une portion de surface plane et perpendiculaire à l'axe 5.

Comme représenté sur la figure 4, la collerette 11 comprend une partie axiale 12, une partie radiale 13 et une partie intermédiaire 14 qui relie ces deux parties 12, 13. Lors de la deuxième étape de déformation, la partie axiale 23a et la partie intermédiaire 23c de la préforme 23 ne sont sensiblement pas déformées et sont donc sensiblement identiques à celles de la collerette 11. En revanche, la partie radiale 23b subit l'effort de pressage de sorte à être conformée. A cet effet, le diamètre de l'ouverture 30 est sensiblement égal au diamètre extérieur de la collerette 11.

En outre, l'effort de pressage induit un repliement de la préforme 23 sur la face latérale 16 de la bague intérieure 2, ce qui permet de former une collerette 11 assurant une fonction de rétention importante sur le moyeu 7.

Dans un autre mode de réalisation non représenté, lors du déploiement, la portion intermédiaire 23e est entièrement inclinée de l'angle δ de sorte que la collerette 11 présente une partie radiale 13 dont la surface latérale annulaire libre 13a présente une portion sensiblement plane et perpendiculaire à l'axe 5 et une portion inclinée d'un angle δ par rapport à la perpendiculaire à l'axe 5.

En variante, lors de l'une et/ou l'autre étape de déformation, la bague extérieure 3 peut être mise en rotation de sorte à augmenter la capacité de charge du roulement 1 et donc diminuer la probabilité d'endommagement des chemins de roulement lors de ces étapes.

La mise en oeuvre du procédé selon l'invention permet donc, en deux étapes de déformation, d'obtenir une collerette 11 qui assure une rétention fiable du roulement 1 sur le moyeu 7.

En outre, cette réalisation en deux étapes, permet d'abord de repousser la matière puis de la déformer sans induire de contraintes excessives sur le roulement 1.

De plus, en réalisant une portion intermédiaire 23e inclinée lors de la première étape de déformation et en déformant ensuite tout ou partie de cette portion intermédiaire pour obtenir la forme définitive de la collerette, la collerette est mise en forme progressivement sans imposer de contrainte trop importante à la matière.

Ainsi, la portion intermédiaire, lorsqu'elle reste visible sur la collerette, réalise un raccordement progressif entre la portion 23d sensiblement plane et la zone 23f inclinée. D'autre part, lorsqu'elle est entièrement conformée par la deuxième étape de déformation, la portion intermédiaire permet une mise en forme graduelle de la collerette. Dans ces deux cas, on évite l'apparition de fissures dans la matière de la partie radiale de la collerette.

En relation avec la figure 7, on décrit ci-dessous une géométrie de collerette obtenue par mise en oeuvre du procédé selon l'invention en utilisant les outils 19 et 27 représentés sur les figures 5 et 6.

Comme décrit ci-dessus en relation avec le procédé, le repliement de la saillie 15 est réalisé essentiellement au moyen du premier outil 19.

En particulier, la surface transversale annulaire libre 12a de la partie axiale 12 est formée par la surface transversale 22a du premier outil 19 de sorte à être sensiblement plane et inclinée d'un angle γ + α par rapport à l'axe 5.

En variante, et notamment lorsque l'effort appliqué au cours de la deuxième étape est important, il peut se produire un arrondissement de la surface 12a par retour de matière, ce qui conduit à la formation d'une surface courbe.

En outre, la partie radiale 13 présente une surface latérale annulaire libre 13a et une surface extrême transversale libre 13b sensiblement parallèle à l'axe 5.

Lors de la première étape de déformation, une portion 13c sensiblement plane et perpendiculaire à l'axe 5 et une portion intermédiaire 13d inclinée d'un angle β par rapport à la perpendiculaire à l'axe 5 sont formées sur la surface latérale annulaire libre 13a de la partie radiale 13 respectivement par les première et deuxième surfaces latérales de révolution 22b et 22c de l'outil 19.

La réalisation de la portion 13c sensiblement plane et perpendiculaire à l'axe 5 permet de garantir un appui correct avec une autre pièce. Cette réalisation est particulièrement adaptée au cas d'un ensemble moteur où un bol de transmission doit être mis en appui sur cette surface 13c.

Lors de la deuxième étape de déformation, une zone extrême 13e de la portion intermédiaire 13d inclinée est formée par la surface transversale 30 de l'outil 27 de sorte à être inclinée d'un angle δ par rapport à la perpendiculaire à l'axe 5.

Ainsi, au terme de ces deux étapes, la surface latérale annulaire libre 13a présente une portion 13c sensiblement plane et perpendiculaire à l'axe 5, une portion intermédiaire 13d inclinée d'un angle β par rapport à la perpendiculaire à l'axe 5 et une zone extrême 13e inclinée d'un angle δ par rapport à la perpendiculaire à l'axe 5.

La deuxième étape permet, en outre, d'améliorer la rétention obtenue au moyen de la collerette 11 en assurant un bon contact entre la collerette 11 et la face latérale 16 de la bague intérieure 2.

La collerette 11 peut présenter, comme autre caractéristique remarquable, des parties axiale 12, radiale 13 et intermédiaire 14 d'épaisseur différente respectivement F, E et S avec E et F inférieures à S, ce qui est reconnu comme étant souhaitable pour obtenir une bonne rétention.

## Revendications

1. Procédé de réalisation d'une collerette (11) annulaire essentiellement radiale sur la partie extrême annulaire creuse (15) d'une pièce (7), ledit procédé comprenant les étapes prévoyant de :
- déformer radialement la partie extrême (15) à l'aide d'un premier outil (19), l'axe (20) de l'outil (19) et l'axe (5) de la partie extrême (15) formant un angle α non nul entre eux, l'outil (19) et la partie extrême (15) étant animés relativement l'un par rapport à l'autre d'une part d'un mouvement de rotation autour de l'axe (5) de la partie extrême (15) et d'autre part d'un mouvement linéaire selon l'axe (5) de la partie extrême (15), de sorte à obtenir une préforme de collerette (23) présentant une partie radiale (23b) ;
- déployer ladite préforme (23) à l'aide d'un deuxième outil (30), ledit outil (30) et ladite préforme (23) étant animés l'un par rapport à l'autre d'un mouvement linéaire selon l'axe (5) de la préforme (23) de sorte à obtenir, par pressage, la mise en forme définitive de la collerette (11) ;
**caractérisé en ce que**, lors de la déformation, une portion intermédiaire (23e) de la surface latérale libre de la partie radiale (23b) est inclinée d'un angle β non nul par rapport à la perpendiculaire à l'axe (5) et **en ce que**, lors du déploiement, au moins une zone extrême (23f) de ladite portion intermédiaire (23e) est inclinée d'un angle δ par rapport à la perpendiculaire à l'axe (5), l'angle δ étant strictement supérieur à l'angle β.

2. Procédé selon la revendication 1, **caractérisé en ce que**, lors du déploiement, la portion intermédiaire (23e) est entièrement inclinée de l'angle δ.

3. Procédé selon la revendication 1 ou 2, **caractérisé en ce que** le premier outil (19) est pourvu d'un logement de contact (22) présentant une surface transversale de révolution (22a) inclinée d'un angle γ par rapport à l'axe (20), une première surface latérale de révolution (22b) inclinée d'un angle α par rapport à la perpendiculaire à l'axe (20) et une deuxième surface latérale de révolution (22c) inclinée d'un angle β - α par rapport à la perpendiculaire à l'axe (20).

4. Procédé selon la revendication 3, **caractérisé en ce que** l'angle γ est supérieur ou égal à l'angle α.

5. Procédé selon l'une quelconque des revendications 1 à 4, **caractérisé en ce que** l'angle α est compris entre 0° et 20°.

6. Procédé selon l'une quelconque des revendications 1 à 5, **caractérisé en ce que** l'angle β est compris entre 10° et 34°.

7. Procédé selon l'une quelconque des revendications 1 à 6, **caractérisé en ce que** l'angle δ est compris entre 34° et 60°.

8. Procédé selon l'une quelconque des revendications 1 à 7, **caractérisé en ce que** le deuxième outil (27) d'axe (28) présente un logement de contact (29) de forme générale tronconique coaxiale et s'évasant vers l'ouverture (30) du logement (29), ledit logement (29) présentant une surface de révolution transversale (31) inclinée d'un angle δ par rapport à la perpendiculaire à l'axe (28) et dont le diamètre intérieur de l'ouverture (29) est sensiblement égal au diamètre extérieur de la collerette (11).

9. Procédé de rétention d'un roulement (1) sur la surface extérieure d'un arbre (7), ledit roulement (1) comprenant au moins une bague intérieure (2) pourvue d'un alésage annulaire (6), une bague extérieure (3) et des corps roulants (4) disposés entre lesdites bagues, ledit arbre (7) présentant un diamètre extérieur sensiblement égal au diamètre de l'alésage (6) et au moins une saillie axiale annulaire creuse (15), ledit procédé comprenant les étapes prévoyant de :
- disposer coaxialement l'arbre (7) dans l'alésage (6) de la bague intérieure (2) de sorte qu'au moins une partie extrême de la saillie (15) soit disposée à l'extérieur de l'alésage (6) ;
- réaliser sur la saillie (15), par mise en oeuvre du procédé selon l'une quelconque des revendications 1 à 8, une collerette (11) s'étendant radialement vers l'extérieur en étant en appui sur au moins une partie de la face latérale (16) de la bague intérieure (2), ladite collerette (11) formant moyen de rétention de la bague intérieure (2) du roulement (1).

10. Procédé selon la revendication 9, **caractérisé en ce que**, lors de la déformation de la saillie (15), un effort axial est appliqué sur la bague intérieure (2) de sorte notamment à limiter les sollicitations appliquées aux bagues (2, 3) lors de cette étape.

11. Procédé selon la revendication 9 ou 10, **caractérisé en ce que** lors d'au moins une étape de réalisation de la collerette (11), la bague extérieure (3) est mise en rotation.

12. Ensemble comprenant un roulement (1) et un arbre (7), ledit roulement (1) étant retenu ou immobilisé sur ledit arbre (7) par mise en oeuvre du procédé selon l'une quelconque des revendications 9 à 11, ladite collerette (11) comprenant une partie axiale (12), une partie radiale (13) et une partie intermédiaire (14) qui raccorde ces deux parties, la partie radiale (13) présentant une surface latérale annulaire libre (13a) et une surface extrême transversale libre (13b) sensiblement parallèle à l'axe (5), la surface latérale annulaire libre (13a) présentant une portion (13c) sensiblement plane et perpendiculaire à l'axe (5), une portion intermédiaire (13d) inclinée d'un angle β par rapport à la perpendiculaire à l'axe (5) et une zone extrême (13e) inclinée d'un angle δ par rapport à la perpendiculaire à l'axe (5).

13. Ensemble selon la revendication 12, **caractérisé en ce que** l'arbre (7) comprend, opposée à la collerette (11), une surface annulaire radiale (17) pour l'immobilisation du roulement (1) dans le sens de disposition.

14. Ensemble selon la revendication 12 ou 13, **caractérisé en ce que** la partie axiale (12) comprend une surface transversale annulaire libre (12a) qui est sensiblement plane et inclinée d'un angle γ + α par rapport à l'axe (5) du roulement (1).

15. Ensemble selon la revendication 12 ou 13, **caractérisé en ce que** la partie axiale (12) comprend une surface transversale libre (12a) qui est courbe.
